# EUROPÄISCHE PATENTSCHRIFT

(11) **EP 2 789 907 B1**
(45) Veröffentlichungstag und Bekanntmachung des Hinweises auf die Patenterteilung: **09.03.2016**
(21) Anmeldenummer: 11876473.7
(22) Anmeldetag: 30.11.2011
(51) Int. Cl.: F21V 21/04, F16B 21/09, F21V 21/08, F21V 21/02, F16B 5/02, F16B 21/06, F21Y 115/10, F21S 8/04

(54) **BELEUCHTUNGSVORRICHTUNG UND MITTEL ZU IHRER BEFESTIGUNG AN EINER TRAGENDEN FLÄCHE**
LIGHTING DEVICE AND MEANS FOR FIXING SAME TO A SUPPORT SURFACE
DISPOSITIF D'ÉCLAIRAGE ET MOYEN DE FIXATION DE CELUI-CI SUR UNE SURFACE D'APPUI

(43) Veröffentlichungstag der Anmeldung: 15.10.2014
(73) Patentinhaber: Society With Limited Liability "Dis Plus", Moscow 105484 (RU); Sokolov, Yuriy Borisovich, Moscow Region 141195 (RU)
(72) Erfinder: SOKOLOV, Yuriy Borisovich, Fryazino Moscow Region 141195 (RU)
(74) Vertreter: Jeck, Anton
(86) Internationale Anmeldenummer: PCT/RU2011/000940
(87) Internationale Veröffentlichungsnummer: WO 2013/081485

(56) Entgegenhaltungen:
- JP-B1- 2 870 636
- KR-A- 20090 123 840
- KR-Y1- 200 442 202
- RU-C1- 2 331 814
- US-A1- 2007 109 751
- US-A1- 2008 105 803
- US-A1- 2009 098 764
- US-A1- 2009 201 174
- US-B1- 7 988 336

## Beschreibung

Die Erfindung betrifft eine Halterung zur Befestigung einer Beleuchtungseinrichtung an einer Tragfläche nach dem Oberbegriff des Anspruchs 1 und eine hiermit ausgestattete Beleuchtungseinrichtung nach dem Oberbegriff des Anspruchs 5.

Die Beleuchtungseinrichtung ist in der Lichttechnik zur Befestigung an einer Tragfläche, insbesondere an Decken oder Wänden, einsetzbar.

Aus dem Stand der Technik ist eine Beleuchtungseinrichtung zur Befestigung an Decken bekannt. Die Beleuchtungseinrichtung weist einen Körper, Strahlquellen, die im Körper untergebracht sind, eine Lichtstreuungsplatte und Halterungen in Form von Platten auf, die steif am Körper befestigt und mit einer Bohrung versehen sind, um den Körper an der Tragfläche zu befestigen (Gebrauchsmusteranmeldung KR 200442202 (Y1), IPC F21V17/00, veröffentlicht am 26.10.2008).

Der Mangel dieser bekannten Beleuchtungseinrichtung ist eine Arbeitsaufwändigkeit bei der Befestigung der Leuchte. Das hängt damit zusammen, dass der Körper positioniert und mit wenigstens zwei Befestigungselementen festgehalten werden muss, bis die Beleuchtungseinrichtung befestigt ist. Der Zusammenbau der Leuchte wird ebenfalls als Mangel betrachtet.

Aus dem Stand der Technik ist eine weitere Beleuchtungseinrichtung zur Befestigung an Decken bekannt. Sie hat Federhalterungen, die am Körper angeschlossen sind. Um die Beleuchtungseinrichtung zu befestigen, muss vorher eine Bohrung in der Deckenplatte gemacht werden. Dabei ist der Durchmesser der Bohrung dafür ausreichend, um die Federn hinter der Platte unterzubringen (Patentanmeldung US 2009091941 (A1), IPC F21V21/04, veröffentlicht am 04.09.2009).

Diese bekannte technische Lösung ist nur für eine Deckenmontage geeignet, hat viele Bauteile im Befestigungsfederwerk, ist kompliziert und arbeitsaufwändig sowie verhältnismäßig teuer.

Der nächstkommmende Stand der Technik gegenüber der Erfindung ist die technische Lösung gemäß der Gebrauchsmusteranmeldung KR 200442202 (Y1). Dieser Stand der Technik gilt als Prototyp.

Aus diesem Stand der Technik ist ein Halterungsmittel mit flachen Metallfedern bekannt. Die Metallfedern sind am Umfang eines Aufsatzkörpers eines Scheinwerfers gleichmäßig angeordnet (Gebrauchsmuster DE 20217193 (U1), IPC F21V11/18, veröffentlicht am 27.03.2003).

Diese bekannte Lösung ist zur Befestigung an Tragflächen nicht geeignet.

Aus dem Stand der Technik ist auch ein Halterungsmittel mit einem elastischen Element bekannt, welches um eine Drehachse begrenzt drehbar und elastisch in eine Grundstellung rückführbar ist (Patentanmeldung KR 20110027271 (A), IPC B42F1/02, veröffentlicht am 16.03.2011) .

Dieses bekannte Halterungsmittel ist vorgesehen, um Blattmaterial wie Papier oder Pappe festzumachen, und ist daher zur Befestigung von Beleuchtungseinrichtungen nicht geeignet.

Aus dem Stand der Technik ist auch das Dokument US 2009/0098764 A1 bekannt, das eine Halterung zur Befestigung einer Beleuchtung nach dem Oberbegriff des Anspruchs 1 offenbart.

Es ist Aufgabe der Erfindung, die Konstruktion der Halterung für Beleuchtungseinrichtungen zu vereinfachen, die Arbeitsaufwändigkeit bei der Montage zu vermindern und der Schutz gegen unbefugte Handlungen zu verbessern.

Die gestellte Aufgabe wird durch die Merkmale des Anspruchs 1 gelöst.

Die erfindungsgemäße Beleuchtungseinrichtung ist durch folgende technische Merkmale gekennzeichnet:
Eine Beleuchtungseinrichtung mit einem Körper und LED- Strahlquellen, die unter einer Lichtstreuungsplatte angeordnet sind, wobei die Lichtstreuungsplatte aus einem optisch durchsichtigen Material ausgebildet ist und wobei eine hintere Platte mit einer Halterung zur Befestigung an einer Tragfläche versehen ist, ist nach der Erfindung dadurch gekennzeichnet, dass die Halterung zur Befestigung an der Tragfläche mit einer Bohrung versehen ist, die durch zwei radiale Einschnitte und ein elastisches Bauteil ergänzt ist. Das elastische Bauteil hat dabei die Form einer Bohrung mit einem radialen Einschnitt und ist am entfernten Rand dieser Bohrung befestigt, so dass es rings um eine Befestigungslinie einwärts des Körpers begrenzt aufbiegbar und frei in eine Grundstellung zurückstellbar ist.

Ausführungsbeispiele für eine Halterung für eine Beleuchtungseinrichtung nach Anspruch 1 sind in den Unteransprüchen unter Schutz gestellt.

Die erfindungsgemäße Halterung zur Befestigung der Beleuchtungseinrichtung an einer Tragfläche ist durch die Gesamtheit von folgenden wesentlichen Merkmalen gekennzeichnet.

Die Halterung zur Befestigung der Beleuchtungseinrichtung an der Tragfläche weist eine Flachplatte mit einer Bohrung auf. Die Halterung ist dadurch gekennzeichnet, dass eine Bohrung durch zwei radiale Einschnitte ergänzt ist. An dem von der Bohrung entfernten Rand eines der Einschnitte ist ein elastisches Bauteil befestigt. Seine Form fällt mit der Form der Bohrung mit einem Einschnitt zusammen. Dabei ist das Bauteil so montiert, dass es rings um die Befestigungslinie begrenzt aufbiegbar und dann frei zur Plattenoberfläche zurückstellbar ist.

Unter dem Begriff Flachplatte ist in der Gesamtheit der technischen Merkmale ein Teil einer hinteren Platte der Beleuchtungseinrichtung mit einer Bohrung mit Einschnitten gemeint. Dieser abgesonderte Abschnitt der hinteren Platte ist im Grunde genommen eine selbständige funktionell abgerundete Halterung für eine beliebige andere Konstruktion, die an einer Tragfläche befestigt ist.

Die Halterung kann durch folgende Merkmale ergänzt werden, um den technischen Effekt zu verstärken:
Die radialen Einschnitte sind diametral ausgerichtet. Eine solche Anordnung der Einschnitte ist am besten geeignet, um die Tragfläche für die Montage der Beleuchtungseinrichtung einfach zu markieren.
   - Die Flachplatte ist mit einem Kanal zur Aufnahme eines Schlüssels versehen. Der Schlüssel ermöglicht es, das elastische Bauteil bei der Demontage der Leuchte begrenzt zu drehen. Der spezielle Schlüssel verhindert dabei eine unbefugte Demontage der Einrichtung.
   - Das elastische Bauteil hat eine Fase auf einem Abschnitt, der von der Befestigungslinie des Bauteils entfernt ist. Dieses Element sieht eine erleichterte Demontage der Leuchte vor.

Die Abbiegbarkeit und die Rückstellbarkeit des elastischen Bauteils in die Grundstellung nach der Wegnahme der Abbiegekraft (Ablenkkraft) sind durch die elastischen Eigenschaften des Bauteilmaterials bedingt. Es muss betont werden, dass das elastische Element in der erfindungsgemäßen Konstruktion eine Sperrfunktion hat im Unterschied zu den z. B. in der Elektrotechnik weit verwendeten vorgefederten elektrischen Dosendeckeln.

Die Halterung kann gemeinsam mit der hinteren Platte der Beleuchtungseinrichtung oder als ein eigenes Einzelbauteil gefertigt werden.

Die Beleuchtungseinrichtung und die Halterung hierfür werden anhand folgender Figuren näher erläutert. Es zeigen:
- Fig. 1: eine perspektivische Darstellung der Frontansicht einer Ausgestaltung der Beleuchtungseinrichtung mit einem Dreieck-Körper,
- Fig. 2: eine perspektivische Darstellung der Hinteransicht der Beleuchtungseinrichtung nach Fig. 1,
- Fig. 3: eine perspektivische Darstellung der Halterung mit einem geschlossenen elastischen Bauteil,
- Fig. 4: eine Seitenansicht der Halterung nach Fig. 3 im geschlossenen Zustand mit einem Befestigungselement,
- Fig. 5: eine gegenseitige Anordnung der Halterungen nach Fig. 3 und des Befestigungselements während der Montage,
- Fig. 6: eine Draufsicht auf die Halterung nach Fig. 3 mit dem entfernten elastischen Element und
- Fig. 7: eine Draufsicht auf die Halterung nach Fig. 3 mit dem entfernten elastischen Element.

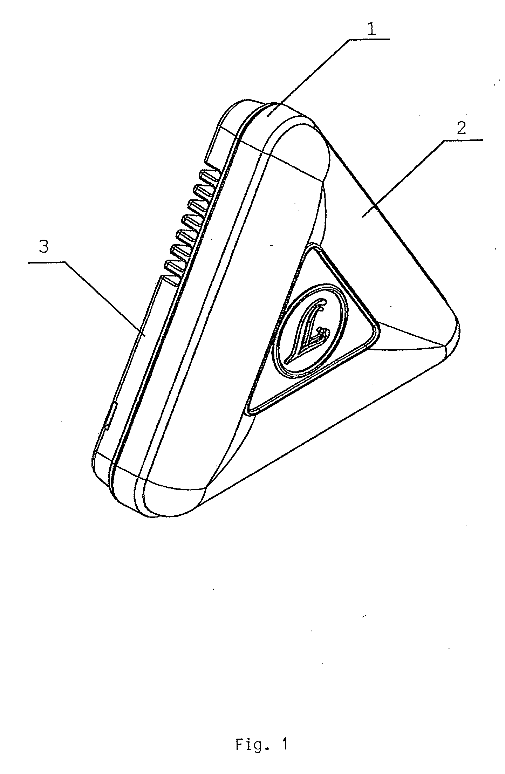

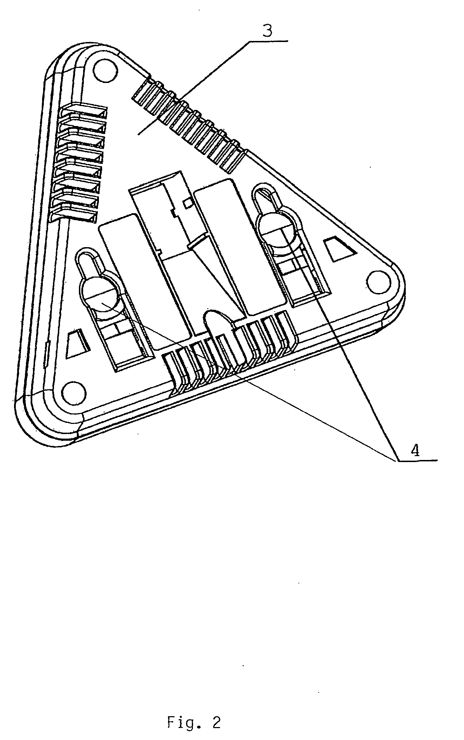

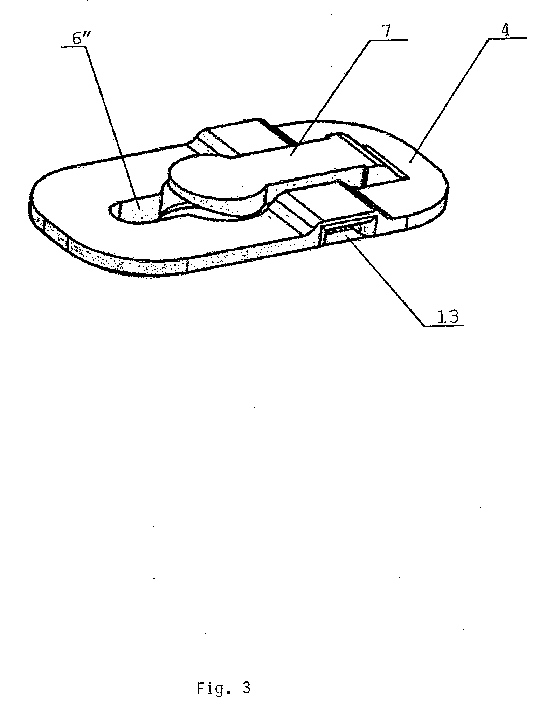

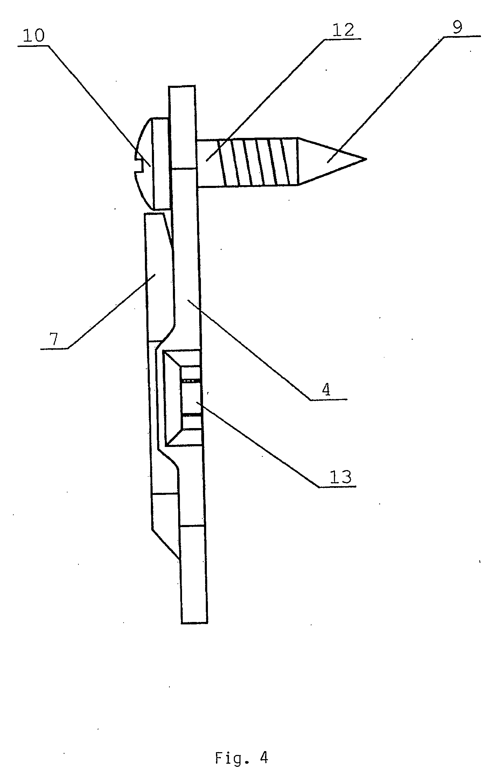

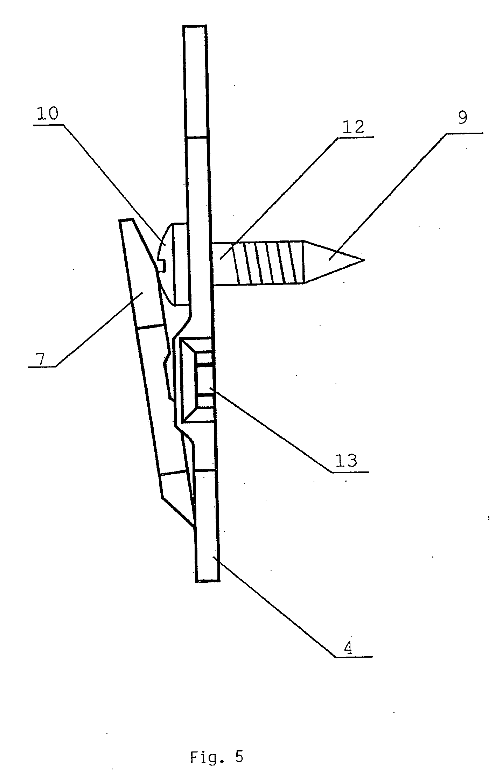

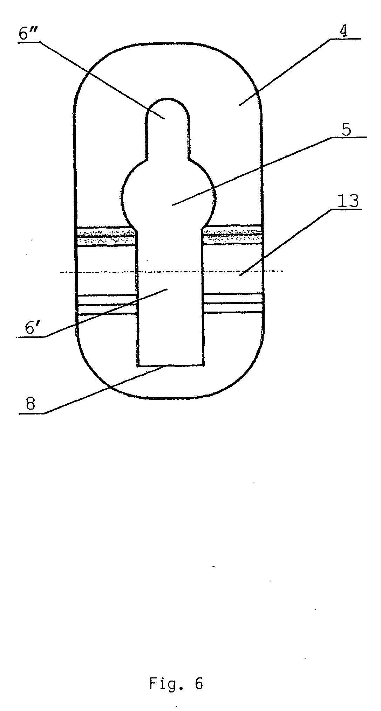

Die Beleuchtungseinrichtung (Fig. 1) enthält einen Körper 1, LED-Strahlquellen (nicht abgebildet), die unter einer Lichtstreuungsplatte 2 angeordnet sind, eine hintere Platte 3 des Körpers 1 (Fig. 2), eine Halterung 4 zur Befestigung der Beleuchtungseinrichtung an einer Tragfläche. Eine Halterung 4 ist mit einer Bohrung 5 versehen (Fig. 6), die durch zwei radiale Einschnitte 6' und 6" und ein elastisches Bauteil 7 (Fig. 3, 4, 5) ergänzt ist. Die Form des Bauteils 7 ist mit der der Bohrung mit einem radialen Einschnitt identisch, hat aber kleinere Abmessungen. Das elastische Bauteil 7 ist am Rand 8 des Einschnitts 6' an der hinteren Platte 3 des Körpers 1 befestigt.

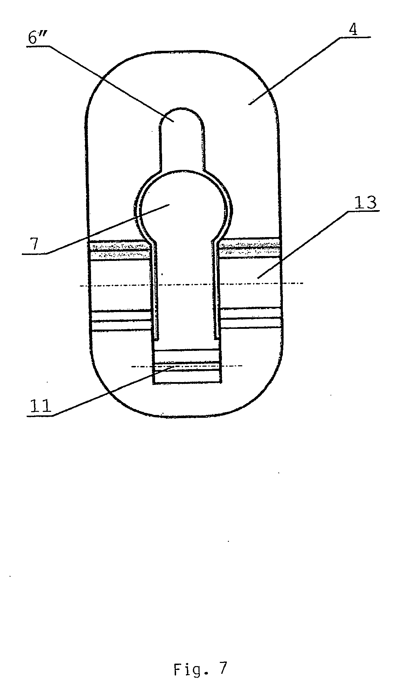

Die Funktionsweise der Halterung zur Befestigung der Beleuchtungseinrichtung an der Tragfläche ist wie folgt:
Bei der Montage wird ein Befestigungselement 9 mit einem Kopf 10 in der Tragfläche montiert. Der Kopfdurchmesser überschreitet nicht den Durchmesser der Bohrung 5 der Halterung 4. Bei einer fortschreitenden Bewegung der Beleuchtungseinrichtung biegt der Kopf 10 des Befestigungselements 9 das elastische Bauteil 7 über die Faltlinie 11 (Fig. 7) einwärts des Körpers 1 ab. Nachdem der Kopf 10 aus der Bohrung 5 hinausgetreten ist, wird die Beleuchtungseinrichtung so versetzt, dass der Schaft 12 des Befestigungselements 9 in den Einschnitt 6" einrastet. Nach Wegnahme der Abbiegekraft kommt das elastische Bauteil 7 in die Grundstellung und sperrt den Kopf 10 des Befestigungselements 9 in der besetzten Stellung, so dass eine selbsttätige Verschiebung des Kopfes 10 vermieden wird. Um die Beleuchtungseinrichtung zu demontieren, wird das elastische Bauteil 7 über den Kanal 13 mit einem speziellen Schlüssel angehoben. Dadurch kann das über die Fase 14 geführte Befestigungselement 9 zur Bohrung 5 verschoben werden, und die Beleuchtungseinrichtung kann entfernt werden.

Ausschließlich zur Veranschaulichung der erfindungsgemäßen technischen Lösung ist in den Figuren 1 und 2 eine Beleuchtungseinrichtung mit einem Dreieck-Körper dargestellt. Der Körper kann praktisch eine beliebige Form und beliebige Abmessungen aufweisen. Die Anzahl der Halterungen kann auch beliebig sein und hängt davon ab, wie viele Halterungen zu einer sicheren Befestigung der Beleuchtungseinrichtung erforderlich sind. Die Halterung kann sowohl ein selbständiges Element oder ein Teil der hinteren Platte der Leuchte sein und gleichzeitig damit hergestellt werden.

Die in der Beschreibung aufgeführten Ausgestaltungen der baulichen Elemente sind nicht erschöpfend. Die erreichbaren effektmäßig gleichwertigen baulichen Lösungen können verschiedene Umsetzungen haben, die für die Ausführung der erfindungsgemäßen technischen Lösung angepasst sind. Die Bauteile der Konstruktion haben verfahrenstechnische Ausführungen, die unter Einsatz bekannter Mittel realisiert werden können, welche eine automatisierte Steuerung zulassen.

## Patentansprüche

1. Halterung (4) zur Befestigung einer Beleuchtungseinrichtung an einer Tragfläche, wobei die Halterung (4) eine Platte (3) mit einer Bohrung (5) aufweist, **dadurch gekennzeichnet,**
**dass** die Bohrung (5) durch zwei radiale Einschnitte (6', 6") ergänzt ist,
**dass** an dem von der Bohrung (5) entfernten Rand (8) eines der Einschnitte (6') ein elastisches Bauteil (7) befestigt ist, dessen Form mit der Form der Bohrung (5) mit einem Einschnitt (6') identisch ist, wobei das elastische Bauteil (7) so montiert ist, dass es rings um eine Befestigungslinie begrenzt aufbiegbar und in eine Grundstellung frei zurückstellbar ist.

2. Halterung zur Befestigung einer Beleuchtungseinrichtung an einer Tragfläche nach Anspruch 1,
**dadurch gekennzeichnet,**
**dass** die radialen Einschnitte (6') diametral ausgerichtet sind.

3. Halterung zur Befestigung einer Beleuchtungseinrichtung an einer Tragfläche nach Anspruch 1,
**dadurch gekennzeichnet,**
**dass** eine Flachplatte mit einem Kanal (13) zur Aufnahme eines Schlüssels versehen ist und
**dass** der Schlüssel eine begrenzte Drehung des elastischen Bauteils (7) bei der Demontage ermöglicht.

4. Halterung zur Befestigung einer Beleuchtungseinrichtung an einer Tragfläche nach Anspruch 1,
**dadurch gekennzeichnet,**
**dass** das elastische Bauteil (7) eine Fase auf einem Abschnitt aufweist, welcher von der Befestigungslinie des Bauteils (7) entfernt ist.

5. Beleuchtungseinrichtung mit einem Körper (1) und LED- Strahlquellen, die unter einer Lichtstreuungsplatte (2) angeordnet sind, wobei die Lichtstreuungsplatte (2) aus einem optisch durchsichtigen Material ausgebildet ist und wobei eine hintere Platte (3) mit einer Halterung (4) zur Befestigung an einer Tragfläche versehen ist,
**gekennzeichnet durch** eine Halterung (4) nach einem der voranstehenden Ansprüche.

## Claims

1. A bracket (4) for fixing a lighting device to a bearing surface, wherein the bracket (4) has a plate (3) with a borehole (5), **characterized in that** the borehole (5) is supplemented by two radial cuts (6', 6"), that on the edge (8) of one of the cuts (6') remote from the borehole (5) an elastic component (7) is fixed, the form of which is identical with the form of the borehole (5) with the cut (6'), wherein the elastic component (7) is mounted, such that it can be bent restrictedly around a fixing line and can be reset freely in an initial position.

2. A bracket for fixing a lighting device to a bearing surface according to claim 1, **characterized in that** the radial cuts (6') are diametrically aligned.

3. A bracket for fixing a lighting device to a bearing surface according to claim 1, **characterized in that** a flat plate with a channel (13) is provided for receiving a key and that the key makes possible a restricted rotation of an elastic component (7) during the disassembly.

4. A bracket for fixing a lighting device to a bearing surface according to claim 1, **characterized in that** the elastic component (7) has a chamfer on a section, which is remote from the fixing line of the component (7).

5. A lighting device with a body (1) and LED beam sources, which are arranged under a light scattering plate (2), wherein the light scattering plate (2) is formed from an optically transparent material and wherein a rear plate (3) is provided with a bracket (4) for fixing to a bearing surface, **characterized by** a bracket (4) according to one of the preceding claims.

## Revendications

1. Support (4) pour la fixation d'un dispositif d'éclairage sur une surface de support, le support (4) comprenant une plaque (3) avec un perçage (5),
**caractérisé en ce que**
le perçage (5) est complété par deux entailles radiales (6', 6"),
au niveau du bord (8), distant du perçage (5), d'une des entailles (6'), est fixé un composant élastique (7), dont la forme est identique à la forme du perçage (5) avec une entaille (6'), le composant élastique (7) étant monté de façon à ce qu'il puisse être rappelé librement autour d'une ligne de fixation de manière flexible limitée et vers une position de base.

2. Support pour la fixation d'un dispositif d'éclairage sur une surface de support selon la revendication 1,
**caractérisé en ce que**
les entailles radiales (6') sont orientées diamétralement.

3. Support pour la fixation d'un dispositif d'éclairage sur une surface de support selon la revendication 1,
**caractérisé en ce que**
une plaque plate est munie d'un canal (13) pour le logement d'une clé et
la clé permet une rotation limitée du composant élastique (7) lors du démontage.

4. Support pour la fixation d'un dispositif d'éclairage sur une surface de support selon la revendication 1,
**caractérisé en ce que**
le composant élastique (7) comprend un chanfrein sur une portion qui est distante de la ligne de fixation du composant (7).

5. Dispositif d'éclairage avec un corps (1) et des sources de rayonnement à LED, qui sont disposées sous une plaque de diffusion de lumière (2), la plaque de diffusion de lumière (2) étant constituée d'un matériau optiquement transparent et une plaque arrière (3) étant munie d'un support (4) pour la fixation sur une surface de support,
**caractérisé par** un support (4) selon l'une des revendications précédentes.
